# EUROPEAN PATENT APPLICATION

(11) **EP 3 916 608 A1**
(43) Date of publication of application: **01.12.2021**
(21) Application number: 20177527.7
(22) Date of filing: 29.05.2020
(51) Int. Cl.: G06F 21/75, G06F 21/85, G06F 21/87

(54) **PROTECTED CIRCUIT SYSTEM AND METHOD OF OPERATION**

(71) Applicant: Thales Nederland B.V., 7550 GD Hengelo (NL)
(72) Inventor: GLINKA, Michael, NL-7550 GD HENGELO (NL)
(74) Representative: Marks & Clerk France

(57) **Abstract**

Circuits are protected from timing attacks by adding a random delay to mask any relation between contents of processed information packages and the processing time required between in- and output signals of protected circuits. This random delay has to be performed preferably inside the protected volume and can be realized by one or more random delay buffers that are realized by means of e.g. random shift-registers. Further protection may be provided by situating the circuits in a single chip housing, such that the signals thereof interfere with each other and it is difficult to obtain information therefrom. A physical barrier may be provided in order to prevent or at least limit physical access to for example at least one TPM chip arranged inside of said barrier. Said physical barrier comprises an impedance, i.e. in form of a capacitor with capacity C and or resistor R and or inductivity L, for example formed by two of said reflector layers of the barrier with an absorbing material in between. Any impedance (i.e. capacity C and/or resistance R and/or inductivity L) change can be detected and any impedance (i.e. capacity and/or resistance and/or inductivity L) change beyond a chosen threshold is indicative of an attempt to physically destruct or enter the barrier. Upon detecting an impedance (i.e. capacity C and/or resistance R and/or inductivity L) change beyond said threshold, any suitable action may be performed, such as deleting all information from said chip, destroying said chip or providing wrong information. The barrier may also act as a reflector for reflecting the desired signal of the at least one chip, such that the desired signal and the reflected signals interfere with each other and it is difficult to obtain information therefrom.

## Description

### FIELD OF THE INVENTION

The present invention relates to protected circuit systems, that is to say, electronic systems incorporating features operable to impede attempts to ascertain or influence aspects of the internal state or operations thereof.

### BACKGROUND PRIOR ART

Protected circuits are designed to protect sensitive digital information. This sensitive information could be valuable for the general safety or for e.g. financial, strategic, military or privacy reasons. It can also be related to the method of encryption and/or the used encryption key(s) or passwords.

Cyber-attacks can be distinguished on the intended effect. This can include stealing of valuable protected information, spoofing (more than just eavesdropping, meaning, also changing the intercepted information, i.e. for "man-in-the-middle" attacks), secretly listening to private conversations or changing contents of intercepted information and/or its flow.

Cyber-attacks on protected circuits can also be distinguished in the way how protected information is extracted. Although many variations and tricks are known these can be roughly classified in four basic methods:
**Tapping of electromagnetic emissions:** Extracting protected information by measuring and analysis of electromagnetic (spurious) radiation induced by the protected circuit. In the prior art damping and/or shielding layers in the housing of protected circuits and/or jamming are applied to complicate the tapping of electromagnetic emissions. However these measures do not provide full protection: by applying extended measuring periods and smart processing technics the protected information can still be reconstructed by other parties.

**Power attacks:** Extracting protected information by accurate analysis of currents over input power lines and/or the grounding connection. A power attack can be based on measurement of the currents over the input and/or grounding lines or, more indirectly, on measurements on the electromagnetic radiation induced by the currents over the wire connections to the power input and/or to the grounding of the protected circuit. The principle is that a small part of the signals of the protected circuit leaks to the input lines. In the prior art low-pass filters are applied to mitigate these unwanted signal leakage via the power lines. However, this does not provide satisfactory protection: information can in principle still be reconstructed by applying long measuring periods and smart processing technics.

**Physical access:** entering a protected system in an unauthorized manner by e.g. sawing or drilling holes in its protecting housing, or illegal modification (of a part) of the protected system by changing of or adding parts to it to extract information is a class of physical access.

**Timing attacks:** Extraction of protected information by analysing of measurements on the processing time required between input and output signals of protected circuits. Timing attackers do not need physical access and are executed remotely from a separate location versus the protected circuits. Information is extracted just by accurate measuring and evaluation of computation times that the protected circuits needs for specific operations.

It is desirable to provide systems offering enhanced resistance to certain of these mechanisms of attack.

### SUMMARY OF THE INVENTION

In accordance with the present invention in a first aspect there is provided a protected circuit system comprising one or more integrated circuits and a timing interface, wherein the timing interface is adapted to receive signals travelling to or from said one or more integrated circuits, to introduce a variable delay to the signals, and to transmit onwards to their intended destination.

In a development of the first aspect the timing interface comprises a FIFO data buffer.

In a development of the first aspect the timing interface comprises a shift register, where the signals travelling to or from said one or more integrated circuits are received at the input of the shift register, and wherein the clock frequency of the shift register is changed from time to time so as to introduce the variable delay.

In a development of the first aspect the timing interface comprises a computer configured to receive signals travelling to or from the one or more integrated circuits, to store the signals in memory, and to retransmit the signals onwards to their intended destination subject to the variable delay.

In a development of the first aspect the variable delay is a random or pseudo-random variation.

In a development of the first aspect the variable delay is chosen such that the total combined duration of the operations performed in said integrated circuits and the variable delay is equal to a pre-determined fixed length.

In a development of the first aspect the variable delay is added at a protocol mode level.

In a development of the first aspect the variable delay is added at a signal mode level.

In a development of the first aspect the one or more integrated circuits comprise a plurality of integrated circuits with a common function and a communications interface, wherein one integrated circuit is a responding integrated circuit, wherein the communications interface is configured to receive instructions from an external host, and to transmit the instructions to each integrated circuit, and to receive an response from the responding integrated circuit, and to transmit said response via the timing interface as an output of said protected circuit system.

In a development of the first aspect, each integrated circuit comprises identical circuits to the extent required for the processing of instructions.

In a development of the first aspect the communications interface comprises a respective plurality of operational amplifiers in a voltage follower configurations.

In a development of the first aspect the protected circuit system further comprises an enclosure, wherein the enclosure comprises a first conductive shell substantially enclosing the one or more integrated circuits and a further conductive component, whereby a complex impedance having a non-zero imaginary component subsists between the first conductive shell and the further conductive component, the protected circuit system further comprising an integrity monitor adapted to detect a deviation in the complex impedance, wherein the integrity monitor is further adapted to perform one or more of instigating a reset one or more of the plurality of integrated circuits, clearing a memory of the protected circuit system, or permanently disabling one or more of the plurality of integrated circuits.

In a development of the first aspect the protected circuit system comprises a plurality of integrated circuits, and wherein the plurality of integrated circuits are spaced apart around the internal periphery of the first conductive shell.

In a development of the first aspect the further conductive component is a second conductive shell nested within the first conductive shell, and electrically isolated therefrom by a dielectric material, vacuum or air gap.

In a development of the first aspect the protected circuit system comprises a plurality of further conductive shells, the further conductive shells being nested each within the next, the first conductive shell being nested in the further conductive shells, wherein alternating conductive shells are electrically connected so that the complex impedance having a non-zero imaginary component subsists between the alternating conductive shells.

In accordance with the present invention in a second aspect there is provided a method of operating a protected circuit system comprising one or more integrated circuits and a timing interface, the method comprising the steps of receiving signals travelling to or from the one or more integrated circuits at the timing interface, introducing a variable delay to the signals, and transmitting them onwards to their intended destination.

In accordance with the present invention in a third aspect there is provided a computer program comprising instructions implementing the steps of the second aspect.

### BRIEF DESCRIPTION OF THE DRAWINGS

The invention will be better understood and its various features and advantages will emerge from the following description of a number of exemplary embodiments provided for illustration purposes only and its appended figures in which:
- Figure 1: shows a first embodiment;
- Figure 2: shows a protected circuit system comprising a timing interface in accordance with a first variant;
- Figure 3: shows a protected circuit system comprising a timing interface in accordance with a second variant;
- Figure 4: shows a protected circuit system comprising a timing interface in a second embodiment;
- Figure 5: shows a protected circuit system comprising according to the embodiment of figure 4 showing further details of a possible implementation of the communications interface;
- Figure 6: shows a protected circuit system comprising an enclosure in a third embodiment;
- Figure 7: shows a protected circuit system in accordance with a variant of the embodiment of figure 6;
- Figure 8: shows a protected circuit system in accordance with a variant of the embodiment of figure 6;
- Figure 9: shows a method of operating a protected circuit system in accordance with an embodiment; and
- Figure 10: shows a generic computing system suitable for implementation of embodiments of the invention.

### DETAILED DESCRIPTION OF THE INVENTION

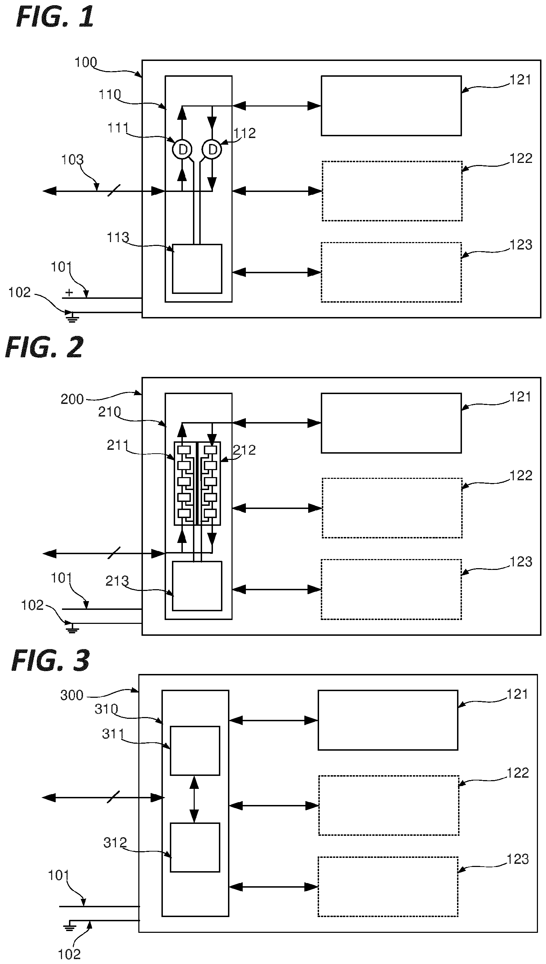

Figure 1 shows a first embodiment.

As shown in figure 1 there is provided a protected circuit system 100 comprising one or more integrated circuits 121, 122, 123, and a timing interface 110.

There may be only one integrated circuit, or any number of circuits- three are shown in figure 1 by way of example. The integrated circuits may comprise additional or ancillary components, and may comprise FPGA, System on Chip (SOC) or other arrangements. The integrated circuits may perform any operation or range of operations. In particular, the integrated circuits may incorporate or execute cryptographic functions. In certain embodiments, the integrated circuits may comprise trusted platform modules, that is to say, a secure crypto-processor or dedicated microcontroller designed to secure hardware through integrated cryptographic keys for example as defined in international standard for **ISO/IEC 11889.** Accordingly, the integrated circuits may be Common-Of-The-Shelf (COTS) hardware chips or so-called "Trusted hardware". Trusted hardware aims to raise the degree of the provided security protection. Trusted COTS hardware is often embodied in the form of a "Trusted Platform Module" (TPM) or -depending on the application- in other pertinent equipment types that represent trusted hardware.

In certain embodiments, the integrated circuits together may provide trusted platform module functionality, and the protected circuit 100 may itself constitute such a trusted platform module, or an enhanced trusted platform module.

As shown, the protected circuit 100 is provided with power supply connections 101, 102. The skilled person will appreciate that the protected circuit may additionally or alternatively be provided with other power sources, for example an internal battery, photovoltaic cells, an inductive power connection, and the like. Still further, power may also be carried on data channels 103, which may for example implement the 1-wire or I2C protocols or similar.

The timing interface 110 is adapted to receive signals travelling to or from the one or more integrated circuits 121, 122, 123, to introduce a variable delay to said signals, and to transmit onwards to their intended destination.

As shown, the timing interface 110 comprises an incoming channel and an outgoing channel, each with a respective delay component 111, 112. As shown, the delay components 111, 112 are controlled by a control element 113. Certain embodiments may comprise a delay element only for ingoing signals, or a delay element only for outgoing signals, or a single delay element which may be controlled to process either incoming our outgoing signals. As shown, signals are only passed to the first integrated circuit 121. It should be understood that insofar as the protected circuit comprises a plurality of integrated circuits, the inputs and/or outputs of these may be processed in the same way as described above with respect to integrated circuit 121.

Still further, where a plurality of integrated circuits is provided implementing the same functions, the timing circuit may preferably implement the same delay operation with respect to the signals of all of them.

As mentioned above, an external observer can record the time differences when the TPM is performing repetitive operations and conclude about the data being processed inside the secure chip. Attacks may be based on the amount of time the TPM takes to do the same thing over and over again.

The TPM device runs at a much lower frequency than the host processor, as it is generally implemented based on a power-constrained platform such as an embedded microcontroller. For example, a modern Intel Core processor's cycle count can be used as a high-precision time reference to measure the execution time of an operation inside the TPM device. In order to perform this measurement on the host processor entirely from software while minimizing noise, the attacker must make sure that the processor's cycle count is read right before the TPM device starts executing a security-critical function, and right after the execution is completed. The skilled person will appreciate that other power attack schemes exist, which may also be resisted by means of embodiments as discussed herein.

By introducing a variable delay, it becomes impossible for the attacker to determine when the integrated circuit received the signal, or when processing occurred with the necessary degree of precision, and furthermore it becomes impossible to presume that identical instructions will stimulate identical responses in view of the variable timing of the circuit's actions.

The nature of the delay may be of various kinds. As already mentioned, a delay may be added at the input, the output, or both. Furthermore, the degree to which a delay is applied to the input and output respective may evolve over time. Where the input or output is carried over multiple data carriers, the timing on each carrier may be varied independently.

The variable delay may be random, as determined for example with a suitable source of unpredictable values such as radioactive decay, thermal noise, shot noise, radio noise and so on. The variable delay may be pseudo-random, based for example on a stored sequence of random values, or a suitable mathematical function, or combination of the two.

Certain types of integrated circuit, including those with cryptographic functions, in particular TPMs as discussed above, may comprise a hardware random value generator. Where this is the case, these circuits may conveniently be used as the source of the variable delay.

The variable delay may be chosen such that the total combined duration of the operations performed in said integrated circuits and the said variable delay is equal to a pre-determined fixed length. Where delay is added on the input, this may involve pre-decoding the instruction and determining the delay on the basis of a stored table of processing times per instruction. Where delay is added on the output, this may involve recording the time of the received signal, and when the response is generated, holding the response until a predetermined time has elapsed.

The skilled person will appreciate that signalling protocols typically comprise different signalling levels, each with its own timing characteristics. For example, individual binary values may have timing structured with respect to individual clock pulses, whilst higher level structures such as frames, packets and the like may be defined in terms of their length or other structural features. Delays in accordance with certain embodiments may be introduced at one, or multiple such levels.

The variable delay may be added at a signal mode level. This approach has the benefit that it requires little or no knowledge of the signalling protocol structure in order to introduce a delay.

The variable delay may be added at a protocol mode level. This approach has the benefit that the benefits of the invention can be achieved with fewer modifications of the data signal.

Signalling protocols will generally have some tolerance for timing errors in received and transmitted data, and certain embodiments may limit the degree of delay to this tolerated level so as to achieve the objectives of the present invention without impeding the operating of the larger system. In other words, delays should preferably not cause impediments for execution of operations (i.e. timeouts) but the delays should preferably be sufficiently large in order to protect vs. the recognition of executed protected circuits (i.e. TPM) operations by measuring any detectable timings (from or around the protected circuit or at the host).
Alternatively or additionally, the introduction of delays may be synchronized with external systems such that such systems can compensate for added delays even where these exceed those that can be tolerated by the underlying protocol.

Such synchronization may be based on a shared secret through the application of cryptographic techniques, and may be seen as an extension of the cryptographic operations of standard TPM chips.

Such synchronization may be achieved by means of quantum entanglement.

The skilled person will appreciate that a variety of mechanisms might be used to introduce a delay or delays in the manner described above. In general terms, the timing interface may be seen as comprising a FIFO data buffer. The skilled person will appreciate that such a FIFO buffer may itself be implemented by a range of different structures.

Figure 2 shows a protected circuit system comprising a timing interface in accordance with a first variant.

The protected circuit system of figure 2 is substantially similar to that of figure 1, with like reference symbols denoting equivalent elements.

As shown in figure 2, the protected circuit system 200 comprises a timing interface 210, in which the delay elements as discussed with respect to figure 1 are implemented by means of respective shift registers 211, 212, shown schematically as a series of flip flops with a common clock line. Real implementations may use other shift register architectures, and be of any length.

The clock lines of the two shift registers 211, 212 are driven by the control module 213. On this basis, a variable delay may be applied to incoming and/or outgoing signals as discussed above by varying the clock frequency of either or both shift registers emitted by the control module.

As such, the timing interface may comprise a shift register, where said signals travelling to or from said one or more integrated circuits are received at the input of said shift register, and wherein the clock frequency of said shift register is changed from time to time so as to introduce said variable delay.

Figure 3 shows a protected circuit system comprising a timing interface in accordance with a second variant.

The protected circuit system of figure 3 is substantially similar to that of figure 1, with like reference symbols denoting equivalent elements.

As shown in figure 3, the protected circuit system 300 comprises a timing interface 310, which comprises a computer. This computer may be configured to receive signals travelling to and/or from the one or more integrated circuits, to store signals in memory, and to retransmit said signals onwards to their intended destination subject to said variable delay.

Any type of computer may implement these functions. The computer may comprise a desktop or laptop computer, a mobile telephone or other such mobile device, or according to preferred embodiments may comprise an embedded microprocessor, microcontroller or other such programmable processing device.

It will be appreciated that where delays are applied only to the incoming signals, or only to the outgoing signals in any of the foregoing embodiments, the signal in whichever direction is not subjected to a delay need not pass through any timing module components, the timing module effect being null or notional to this extent.

It will be appreciated that for the sake of simplicity each integrated circuit is shown as having only a single input and a single output. Where multiple inputs and/or outputs are provided, additional timing circuits may be provided as necessary along the lines described herein.

Such a computer may conveniently implement other functions, for example if desired a flexible 'administration access' from outside the protected volume, or integrity monitoring as described further below.

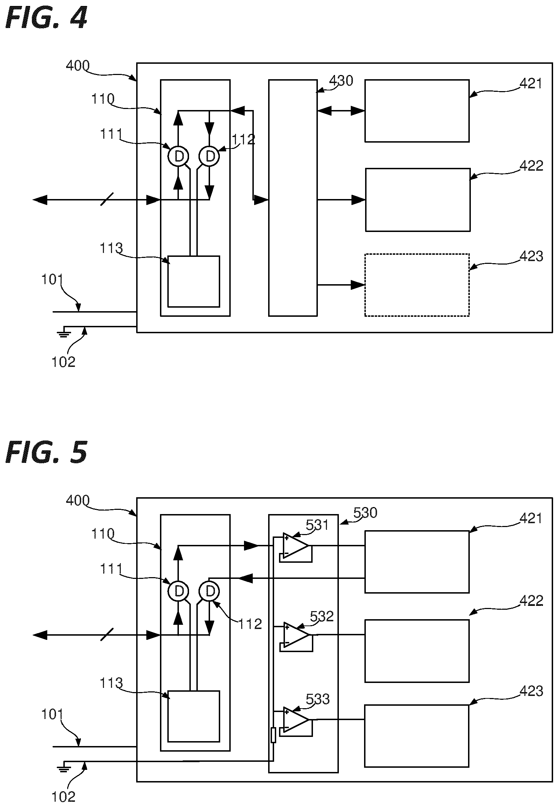

Figure 4 shows a protected circuit system comprising a timing interface in a second embodiment.

The protected circuit system of figure 4 is substantially similar to that of figure 1, with like reference symbols denoting equivalent elements.

As shown in figure 4, the protected circuit system 400 comprises in addition to the elements described with reference to figure 1 a communications interface 430 receiving the signals output by the timing interface, and, wherein one said integrated circuit 421 is a responding integrated circuit, wherein said communications interface is configured to receive instructions from an external host, and to transmit said instructions to each said integrated circuit, and to receive an response from said responding integrated circuit, and to transmit said response via said timing interface as an output of said protected circuit system.

In this embodiment the integrated circuits 421, 422, 423 have a common function, and one integrated circuit is a responding integrated circuit. At least one of the integrated circuits is a non-responding integrated circuit, as described below.

In accordance with this embodiment, while the communications interface transmits instructions to each integrated circuit, and each integrated circuit performs the same processing in response to the received instruction, a response is emitted solely by the responding integrated circuit, (and not by the non-responding integrated circuits 422, 423) which may then be transmitted via said timing interface as an output of the protected circuit system.

The skilled person will appreciate that although the plurality of integrated circuits 421, 422, 423 perform the same function, even if they constitute examples of a single circuit reference, minute variations in behaviour will subsist due for example to manufacturing process variations, chip service duration and the like. Furthermore, each integrated circuit may have a different internal start vector for calculations (for example, TPM chips each possess a unique private key, which leads to differences is the internal response provided by each chip to the same instruction.

These variations will mean that although any such chip will respond to an instruction in substantially the same way, and produce the same result, the precise time taken to output the result and the characteristic radiation signature of each chip during processing will typically vary to some small degree. Accordingly, each integrated circuit may comprise an identical circuit to the extent required for the processing of said instructions, or indeed examples of a single circuit reference.

In cases where the variation between the responses of the respective integrated circuits would otherwise be insufficient to optimally achieve the desired effect, the communications interface 430 may further operate to provide slightly different requests to each integrated circuit. This may be achieved by introducing a slight variation in the timing of the transmission of instructions to each integrated circuit, or adjusting a certain field of the instruction.

Furthermore, since the plurality of integrated circuits is physically discrete, the radiation emitted during processing performed by each integrated circuit will constructively or destructively interfere with each other.
These two considerations mean that the parallel operation of the integrated circuits will produce a chaotic, unpredictable radiation signature which provides no clear indication of the operations being performed, and thereby make the protected circuit system of the present embodiment further resistant to physical measuring based attacks.

This effect may similarly be achieved at chip level, for example where two separate lines carry signals from respective circuits in a way that interference occurs between those lines.

It will be appreciated that this approach provides synergistic effects together with the variable delay introduced by the timing interface as discussed above. While the embodiment of figure 4 is presented together with the timing interface configuration of figure 1, it will be appreciated that the same principles could be combined with the timing interface implementation, and/or any of the other implementation details, described herein, including for example those described with respect to figures 2 or 3.

As discussed above, certain types of integrated circuit, including those with cryptographic functions, in particular TPMs as discussed above, may comprise a hardware random value generator. Where this is the case, these circuits may conveniently be used as the source of the variable delay. In cases where one of the integrated circuits operates as a responding integrated circuit for example in accordance with the current embodiment, one or more of the non-responding integrated circuits may advantageously be used as the source of a variable delay.

It will be appreciated that while the timing interface 110 and communications interface 430 are shown as sequential stages with incoming signals passing through the timing interface before the communications interface, and responses passing back through the communications interface before passing through the timing interface for retransmission, this is merely a schematic representation for the sake of clarity. In real implementations the timing and interface functions may not be implemented in discrete modules. The operations may be performed in any order, for example with incoming signals passing through the communications interface before the timing interface, and responses passing back through the timing interface before passing through the communications interface for retransmission. It will further be appreciated that where delays are applied only to the incoming signals, or only to the outgoing signals, the signal in whichever direction is not subjected to a delay need not pass through any timing module components, the timing module effect being null or notional to this extent.

The delay elements are preferably not placed separately per single inbound path of the voltage followers, because where the integrated circuits receive their *common* input signal at the same time, the sought interference is maximized if the integrated circuits generate their response simultaneously.

Figure 5 shows a protected circuit system comprising according to the embodiment of figure 4 showing further details of a possible implementation of the communications interface.

The protected circuit system of figure 5 is substantially similar to that of figure 4, with like reference symbols denoting equivalent elements.

As shown in figure 5, the protected circuit system 400 comprises a communications interface 530, which is functionally equivalent to the element 430 as described above. As shown, the communications interface 530 comprises a respective plurality of Operational Amplifiers (op-amps) 531, 532, 533 in a voltage follower configuration for each integrated circuit 421, 422, 423 respectively. The output of the timing interface provides the same instruction signal to the non-inverting input of each op-amp 531, 532, 533, while the output of each op-amp 531, 532, 533 is connected to the respective signal input of each integrated circuit 421, 422, 423, as well as the inverting input of that respective op-amp. Meanwhile, the signal output of the responding integrated circuit 421 is connected directly to the timing interface 110, the outputs of the other integrated circuits 422, 423 being ignored.

The op-amps 531, 532, 533 thus have the effect of masking the presence of multiple integrated circuits from the input/output side of the protected circuit system, so that operationally the protected circuit system behaves as if only one integrated circuit 421 were present.

It will be appreciated that many buffer circuits achieving similar effects will readily occur to the skilled person. Furthermore, depending on the details of the circuitry on the input/output side of the protected circuit system, and the behaviour of the integrated circuits, different circuits in the communications interface may by indicated, and indeed in some cases a simple common electrical connection may suffice.

It will be appreciated that for the sake of simplicity each integrated circuit 421, 422, 423 is shown as having only a single input and a single output. Where multiple inputs and/or outputs are provided, additional timing and communications circuits may be provided as necessary along the lines described herein.

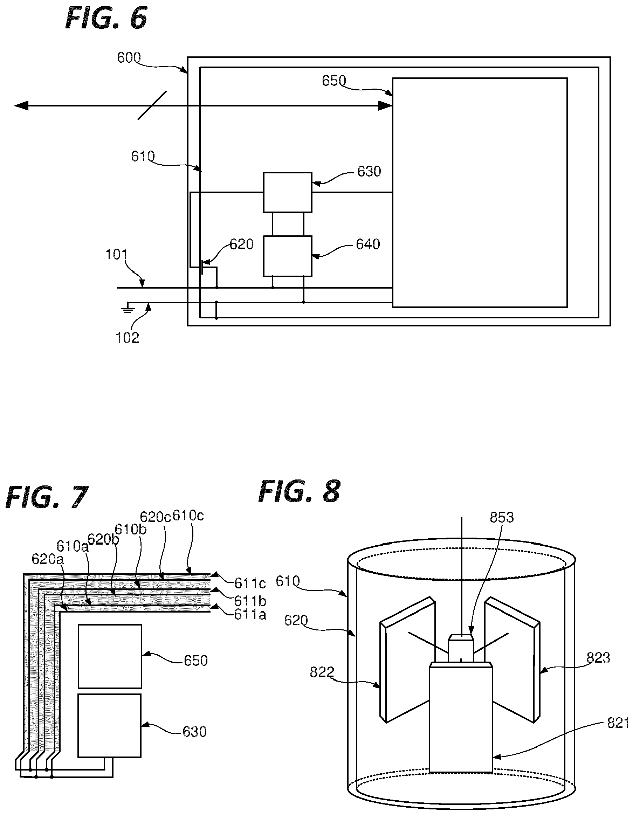

Figure 6 shows a protected circuit system comprising an enclosure in a third embodiment.

The protected circuit system of figure 6 is substantially similar to that of figure 1, with like reference symbols denoting equivalent elements.

As shown in figure 6, there is provided a protected circuit core 650. The protected circuit core may comprise any or all of the components of the protected circuit system of any of the preceding embodiments, for example as described with reference to any of figures 1 to 5. The protected circuit system of figure 6 further comprises an enclosure 600, the enclosure 600 comprising a first conductive shell 610 substantially enclosing the one or more integrated circuits as described above, and any other components in the protected circuit core 650. As shown in figure 6 there is provided a further conductive component 620 whereby a complex impedance having a non-zero imaginary component subsists between said first conductive shell 610 and the further conductive component 620. This is represented as a capacitance, and may additionally or alternatively comprise an inductive component.

As shown, the protected circuit system further comprises an integrity monitor 630, adapted to detect a deviation in the complex impedance, wherein said integrity monitor is further adapted to perform a security operation.

Security operations may involve one or more of instigating a reset of one or more of the plurality of integrated circuits, clearing a memory of the protected circuit system, permanently disabling said one or more of the plurality of integrated circuits, overwriting the sensitive information in that memory several times e.g. to an appropriate security standard to ensure really that no information can leak out of the protected volume, silent alarming, increased monitoring, network separation, and any other appropriate operations as will occur to the skilled person.

Detecting a deviation in the complex impedance may comprise periodically measuring the value of the complex impedance, or a derivative value, for example by measuring the discharge time, voltage in the presence of a alternating voltage of known frequency, and the like, and comparing the obtained measurement to a stored predetermined threshold value, or historical measurement, or a statistical derivation of historical measurements, such as a mean over a predetermined period, or any combination of these, with a view to detecting an anomalous variation in complex impedance which is likely to be indicative of a physical interference with the conductive shell, for example if a conductive tool is brought into contact with the shell, if the shell is forced closer to or further from, or into direct electrical contact with the further conductive component, or if the form or continuity of the shell is modified in any way, a measurable change in complex impedance may be expected.

It will be appreciated that the changes in complex impedance due to attempted interference can be magnified through suitable design of the conductive shell and the further conductive component, in particular with a view to achieving a high initial complex impedance. This may be achieved for example by increasing the area of further conducting element facing the conducting shell, and reducing the distance separating the further conducting element and the shell, for example with a film of a suitable dielectric material. The skilled person will appreciate the equivalent effects may be achieved by additionally or alternatively monitoring the inductive characteristics of the conductive shell, and where this approach is adopted may further adjust the physical configuration of the shell and further conductive element to emphasise inductive variations in the case of tampering.

Accordingly, there is also provided a protected circuit system comprising one or more integrated circuits in an enclosure, the protected circuit system being characterized in that the enclosure comprises a first conductive shell substantially enclosing the one or more integrated circuits and a further conductive component, whereby a complex impedance having a non-zero imaginary component subsists between the first conductive shell and said further conductive component. The protected circuit system may further comprise an integrity monitor adapted to detect a deviation in the complex impedance. The protected circuit system may further comprise an energy storage device providing energy to the integrity monitor in case of an interruption of external power supply. The integrity monitor may further be adapted to perform one or more of instigating a reset of said one or more integrated circuits, clearing a memory of said trusted platform system, or permanently disabling said one or more integrated circuits. The protected circuit system of any preceding claim may further comprise an energy storage device 640 providing energy to the integrity monitor in case of an interruption of external power supply. The integrated circuits may implement a common function. The integrated circuits may be trusted platform modules. The said protected circuit system may comprise a plurality of integrated circuits, and the integrated circuits may be spaced apart around the internal periphery of the first conductive shell. The protected circuit system may comprise a plurality of integrated circuits, and the communications interface may be positioned centrally with respect to the conductive shell. The first conductive shell may be substantially cylindrical.

The further conductive component may be a second conductive shell nested within the first conductive shell, and electrically isolated therefrom by a dielectric material, vacuum or air gap. The protected circuit system may comprise a plurality of further conductive shells, the further conductive shells being nested each within the next, the first conductive shell being nested in the further conductive shells, and wherein alternating conductive shells are electrically connected so that the complex impedance having a non-zero imaginary component subsists between the alternating said conductive shells. The protected circuit system may comprise features of any other embodiment, for example shown in and described with respect to figure 6, figure 7, or figure 8.
Similarly, there is provided a method of operating a protected circuit system comprising one or more integrated circuits in an enclosure, wherein the enclosure comprises a first conductive shell substantially enclosing the one or more integrated circuits and a further conductive component, the method comprising the steps of monitoring a complex impedance having a non-zero imaginary component subsisting between said first conductive shell and said further conductive component. The method may comprise the further steps of detecting a deviation in said complex impedance, and when a deviation in said complex impedance is detected, instigating a reset of said one or more integrated circuits, clearing a memory of said trusted platform system, or permanently disabling said one or more integrated circuits.

Figure 7 shows a protected circuit system in accordance with a variant of the embodiment of figure 6.

The protected circuit system of figure 7 is substantially similar to that of figure 7, with like reference symbols denoting equivalent elements.

In particular, figure 7 shows the protected circuit core 650 and the integrity monitor 630. Meanwhile figure 7 provides additional detail of the conductive shell 610 and the further conductive element 620 in accordance with a variant of the third embodiment. As shown, the further conductive component 620 may constitute a second conductive shell 620a nested within the first conductive shell 610a, and electrically isolated therefrom by a dielectric material, vacuum or air gap 611a. Still further the protected circuit system may comprise a plurality of further conductive shells 610b, 620b, 610c, 620c, the further conductive shells being nested each within the next, the first conductive shell 610a being nested in the further conductive shells, wherein alternating conductive shells are electrically connected so that the complex impedance having a non-zero imaginary component subsists between said alternating conductive shells. As shown, the shells in each respective pair of shells are separated by a respective dielectric material, vacuum or air gap 611a, 611b, 611c. As shown, each respective pair of shells is separated from the adjacent pairs by a respective dielectric material, vacuum or air gap.

The integrity monitor 630 is coupled across the interleaved shells, and operates in the same manner as described with reference to figure 6.

It may be noted that as shown in figure 6 the conducting shell is coupled to the ground line 102 and the further conducting element is coupled to the positive supply line 101. It will be appreciated that insofar as the complex impedance constitutes a capacitance; this arrangement establishes a low pass filter across the power lines, so that high frequency components which may reflect the activities of the integrated circuits as described above are coupled to ground and filter out. The size and configuration of the shells, and additional components may be added to tune the filter to optimally filter out characteristic frequencies of the integrated circuits.

It will be appreciated that the approach of figures 6 and 7 may also provide additional synergies with that of figures 4 and 5. Specifically, as described above, the arrangement of figures 4 and 5 achieves protection against attacks by creating interface between the similar radiations patterns of multiple integrated circuits. By enclosing the integrated circuits in a conductive shell, the radiation emitted by the protected circuit system will be reduced, and furthermore the conductive shell will tend to reflect radiation internally, further complexifying and exaggerating the interplay of destructive and constructive interference between the signals.

The dimensions, shape and materials of the conductive shell may be further selected with a view to increasing the degree of internal reflection, and optimally complexifying and exaggerating the interplay of destructive and constructive interference between the signals.

The conductive shell may advantageously be spherical or hemispherical.

In certain embodiments, one or more additional absorber layers may be provided, with a view to attenuating electromagnetic radiation at wavelengths corresponding to those emitted by the integrated circuits as described above. These absorbent layers may advantageously continuously enclose the device in a similar manner to the shells as described herein. Absorbent layers may be provided outside an outer conductive shell, within an inner conductive shell, or interleaved between conductive shells either in addition to the dielectric layers as described in, or functioning also as dielectric layers, or any combination of these arrangements.

Figure 8 shows a protected circuit system in accordance with a variant of the embodiment of figure 6.

The protected circuit system of figure 8 is substantially similar to that of figure 6, with like reference symbols denoting equivalent elements.

As shown in figure 8, a conductive shell 610 is provided, with and further conductive element in the form of a nested shell 620. The conductive shell 610 and further conductive element are cylindrical, which tends to increase the degree of internal reflection, and complexify and exaggerate the interplay of destructive and constructive interference between the signals, whilst retaining good compatibility with conventional manufacturing techniques.

Within the conductive shell 610 are disposed a plurality of integrated circuits 821, 822, 823, corresponding generally for example to the integrated circuits 121, 122, 123 or 421, 422, 423 as described above. As shown, the plurality of integrated circuits 821, 822, 823, are spaced apart around the internal periphery of said first conductive shell. By spacing the integrated circuits apart in this manner, the degree of internal reflection is increased, the interplay of destructive and constructive interference between the signals is complexified and exaggerated.

The integrated circuits may advantageously be spaced equally about the internal periphery. The integrated circuits may advantageously be spaced approximately half way between the centre of the conductive shell, and the periphery.

As shown, further circuits, such as the timing interface and/or the communications interface 853 as described above are provided centrally, with data connections provided coaxially with respect to the cylindrical conductive shell.

The integrity monitor is not shown, and may be positioned anywhere within the conductive shell as convenient.
The delay element (inbound or outbound) or the two delay elements (inbound and outbound) are preferably realised within the protected volume.

In certain embodiments as an alternative to the arrangement of figure 8, integrated circuits may by disposed one on top of another in a plurality of layers. The timing interface and/or the communications interface as described herein may also occupy an additional layer, Where a responding integrated circuit is defined, this may advantageously be situated in a layer near the center of the stack so as to maximise the interference from the outer layers in emerging stray signals. Similarly the timing interface and/or the communications interface as described herein may also advantage occupy an additional layer near the center of the stack so as to maximise the interference from the outer layers in emerging stray signals. The length and width may preferably be the same for each layer, so that the layers define together a regular cuboid having a footprint of comparable or equal dimensions to standard "off the shelf" form factors. External electrical connections may be provided in the same position as for conventional devices of equivalent functionality, rendering the additional security features of the present invention less apparent to the external observer. Such embodiments may be adapted to incorporate any of the variants described above, for example with regard to any of figures 1 to 7.

In certain embodiments as an alternative to the arrangement of figure 8, integrated circuits may by disposed linearly, one next to another along a continuous substrate. The timing interface and/or the communications interface as described herein may also occupy a position in the same linear arrangement. Where a responding integrated circuit is defined, this may advantageously be situated in a position near the center of the linear arrangement so as to maximise the interference from the outer layers in emerging stray signals. Similarly the timing interface and/or the communications interface as described herein may also advantage occupy a position near the center of the linear arrangement so as to maximise the interference from the outer layers in emerging stray signals. The disposition of circuits in such embodiments may accordingly define a quadrilateral substrate with of much greater length than width. The height of this configuration may be the same as for typical silicon wafers, ensuring compatibility with standard "off the shelf" form factors. Such embodiments may be adapted to incorporate any of the variants described above, for example with regard to any of figures 1 to 7.

As described above certain embodiments may comprise a battery or other such energy storage element. Such elements may comprise a layered structure. It will be appreciated that certain embodiments for example as discussed with respect to figure 6, 7, 8 or the preceding paragraphs also suggest a layered structure. On this basis, the layered structure of the energy storage element may take the form of additional layers of such a structure.

Accordingly, circuits are protected from timing attacks by adding a random delay to mask any relation between contents of processed information packages and the processing time required between in- and output signals of protected circuits. This random delay is preferably performed inside the protected volume and can be realized by a random delay buffer that are realized by means of e.g. random shift-registers or otherwise as discussed above. Further protection may be provided by situating the circuits in a single chip housing, such that the signals thereof interfere with each other and it is difficult to obtain information therefrom. A physical barrier may be provided in order to prevent or at least limit physical access to for example at least one TPM chip arranged inside of said barrier. The physical barrier may comprise an impedance, i.e. in form of a capacitor with capacity C and or resistor R and or inductivity L, for example formed by two of said reflector layers of the of the shell as described above with an absorbing material in between. Any impedance (i.e. capacity C and/or resistance R and/or inductivity L) change can be detected and any impedance (i.e. capacity and/or resistance and/or inductivity L) change beyond a chosen threshold is indicative of an attempt to physically destruct or enter the barrier. Upon detecting an impedance (i.e. capacity C and/or resistance R and/or inductivity L) change beyond said threshold, any suitable action may be performed, such as deleting all information from said chip, destroying said chip or providing wrong information. The barrier may also act as a reflector for reflecting the desired signal of the at least one chip, such that the desired signal and the reflected signals interfere with each other and it is difficult to obtain information therefrom.

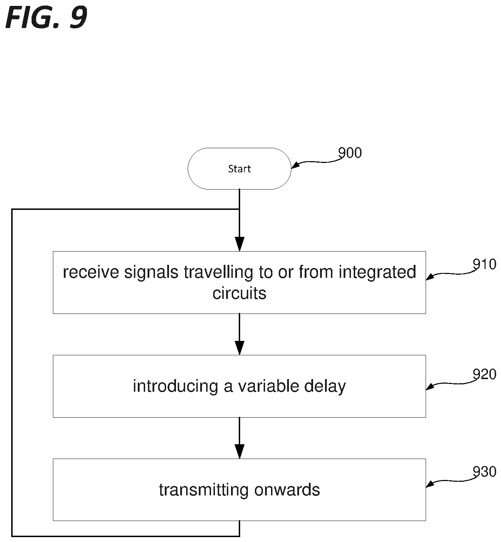

Figure 9 shows a method of operating a protected circuit system in accordance with an embodiment.

In particular, figure 9 shows a method of operating a protected circuit system comprising one or more integrated circuits and a timing interface, for example as presented above. The method starts at step 900 before proceeding to step 910 at which signals travelling to or from said one or more integrated circuits are received at the timing interface. The method next proceeds to step 920 at which a variable delay is introduced to the signals. The method then proceeds to step 930 at which the signals are transmitted onwards to their intended destination. The method may then terminate, or as shown, may loop back to step 910 to process further signals.

The method of figure 9 may be extended to include further steps implementing the functions described with respect to any of the preceding embodiments. For example, the step of introducing a variable delay may comprise storing the received signals in a FIFO data buffer, a shift register or a suitably operated memory device, which may be under the control of a computer processor or otherwise. The variable delay may be random or pseudo-random, or chosen such that the total combined duration of the operations performed in said integrated circuits and the said variable delay is equal to a pre-determined fixed length or otherwise.

The step of introducing a variable delay may comprise adding a variable delay at a protocol mode level, or at a signal level, or otherwise.

The step of transmit said signals to their intended destination may comprise sending the same signal to each of the integrated circuit, the method comprising the further step receive an response from a predetermined one of the integrated circuits, and a further step of transmit the response as an output of said protected circuit system.

Software embodiments include but are not limited to application, firmware, resident software, microcode, etc. The invention can take the form of a computer program product accessible from a computer-usable or computer-readable medium providing program code for use by or in connection with a computer or an instruction execution system. Software embodiments include software adapted to implement the steps discussed above with reference to figures 1 to 8. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a drone, a computer or any other device with processing capability, such as a robot or other connected device, including loT (Internet of Things) devices.

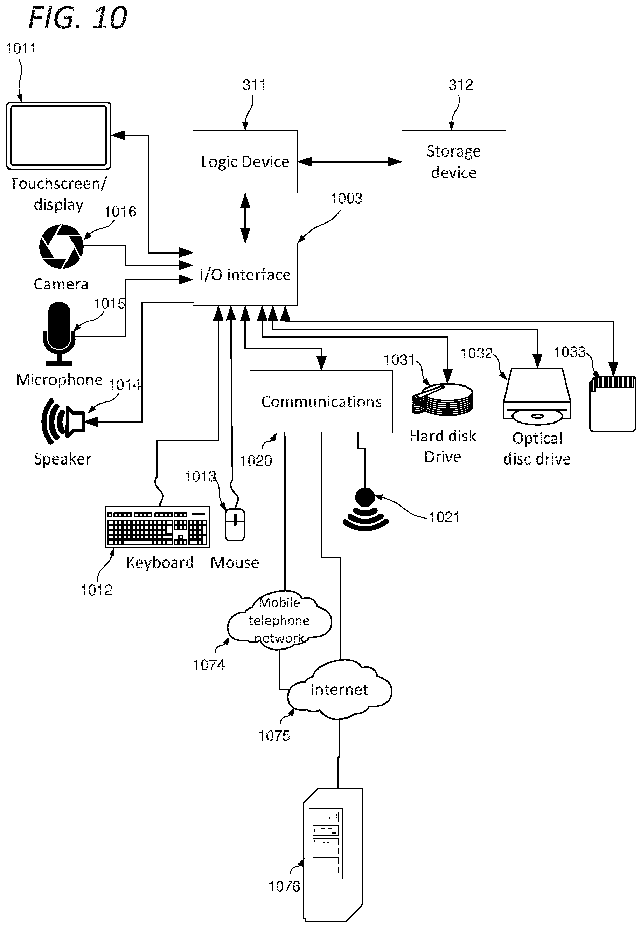

Figure 10 shows a generic computing system suitable for implementation of embodiments of the invention.

A shown in figure 10, a system includes a logic device 311 and a storage device 312. The system may optionally include a display subsystem 1011, input/output subsystem 1003, communication subsystem 1020, and/or other components not shown.

Logic device 311 includes one or more physical devices configured to execute instructions. For example, the logic device 311 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 311 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 311 optionally may be distributed among two or more separate devices, which may be remotely located and/or configured for coordinated processing. Aspects of the logic device 311 may be virtualized and executed by remotely accessible, networked computing devices configured in a cloud-computing configuration.

Storage device 312 includes one or more physical devices configured to hold instructions executable by the logic device to implement the methods and processes described herein. When such methods and processes are implemented, the state of storage 312 device may be transformed-e.g., to hold different data.

Storage device 312 may include removable and/or built-in devices. Storage device may be locally or remotely stored (in a cloud for instance). Storage device 312 may comprise one or more types of storage device including optical memory (e.g., CD, DVD, HD-DVD, Blu-Ray Disc, etc.), semiconductor memory (e.g., FLASH, RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices.

In certain arrangements, the system may comprise an interface 1003 adapted to support communications between the logic device 311 and further system components. For example, additional system components may comprise removable and/or built-in extended storage devices. Extended storage devices may comprise one or more types of storage device including optical memory 832 (e.g., CD, DVD, HD-DVD, Blu-Ray Disc, etc.), semiconductor memory 1033 (e.g., RAM, EPROM, EEPROM, FLASH etc.), and/or magnetic memory 1031 (e.g., hard-disk drive, floppy-disk drive, tape drive, MRAM, etc.), among others. Such extended storage device may include volatile, non-volatile, dynamic, static, read/write, read-only, random-access, sequential-access, location-addressable, file-addressable, and/or content-addressable devices.

It will be appreciated that the storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 311 and storage device 312 may be integrated together into one or more hardware-logic components. Such hardware-logic components may include field-programmable gate arrays (FPGAs), program-and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device 312. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 10 may be used to implement embodiments of the invention.

For example a program implementing the steps described with respect to figure 9, or the algorithms presented above may be stored in storage device 312 and executed by logic device 311. Messages received from outside the system, or from the integrated circuits, may be stored in storage device 312, 1031, 1032, 1033, e.g. for the purposes of imposing a delay. A program instructions implementing the functions of the integrity monitor may also be implemented, the I/O interface 1003 may perform any of the security operations as described above.

Accordingly the invention may be embodied in the form of a computer program.

It will be appreciated that a "service", as used herein, is an application program executable across multiple user sessions. A service may be available to one or more system components, programs, and/or other services. In some implementations, a service may run on one or more server-computing devices.

When included, input subsystem may comprise or interface with one or more user-input devices such as a keyboard 1012, mouse 1013, touch screen 1011, or game controller, or camera 1016. The input/output interface 1003 may similarly interface with a loudspeaker 1014, vibro-motor or any other transducer device as may occur to the skilled person.

When included, communication subsystem 1020 may be configured to communicatively couple computing system with one or more other computing devices. For example, communication module of communicatively couple computing device to remote service hosted for example on a remote server 1076 via a network of any size including for example a personal area network, local area network, wide area network, or internet. Communication subsystem may include wired and/or wireless communication devices compatible with one or more different communication protocols. As non-limiting examples, the communication subsystem may be configured for communication via a wireless telephone network 1074, or a wired or wireless local- or wide-area network. In some embodiments, the communication subsystem may allow computing system to send and/or receive messages to and/or from other devices via a network such as Internet 1075. The communications subsystem may additionally support short range inductive communications with passive or active devices (NFC, RFID, UHF, etc.). In certain variants of the embodiments described above, the traffic data may be received via the telephone network 1074 or Internet 1075. Such a computer may conveniently provide a flexible 'administration access' from outside the protected volume.

The system of figure 10 is intended to reflect a broad range of different types of information handling system. It will be appreciated that many of the subsystems and features described with respect to figure 10 are not required for implementation of the invention, but are included to reflect possible systems in accordance with the present invention. It will be appreciated that system architectures vary widely, and the relationship between the different sub-systems of figure 10 is merely schematic, and is likely to vary in terms of layout and the distribution of roles in systems. It will be appreciated that, in practice, systems are likely to incorporate different subsets of the various features and subsystems described with respect to figure 10.

Examples of devices comprising at least some elements of the system described with reference to figure 10 and suitable for implementing embodiments of the invention include cellular telephone handsets including smart phones, and vehicle navigation systems.

The examples described above are given as non-limitative illustrations of embodiments of the invention. They do not in any way limit the scope of the invention which is defined by the following claims.

## Claims

1. A protected circuit system comprising one or more integrated circuits and a timing interface, wherein said timing interface is adapted to receive signals travelling to or from said one or more integrated circuits, to introduce a variable delay to said signals, and to transmit onwards to their intended destination.

2. A protected circuit system comprising one or more integrated circuits and a timing interface, wherein said timing interface comprises a FIFO data buffer.

3. The protected circuit system of claim 2 wherein said timing interface comprises a shift register, where said signals travelling to or from said one or more integrated circuits are received at the input of said shift register, and wherein the clock frequency of said shift register is changed from time to time so as to introduce said variable delay.

4. The protected circuit system of claim 2 wherein said timing interface comprises a computer, said computer being configured to receive signals travelling to or from said one or more integrated circuits, to store said signals in memory, and to retransmit said signals onwards to their intended destination subject to said variable delay.

5. The protected circuit system of any preceding claim wherein said variable delay is a random or pseudo-random variation.

6. The protected circuit system of any preceding claim wherein said variable delay is chosen such that the total combined duration of the operations performed in said integrated circuits and the said variable delay is equal to a pre-determined fixed length.

7. The protected circuit system of any preceding claim wherein said variable delay is added at a protocol mode level.

8. The protected circuit system of any preceding claim wherein said variable delay is added at a signal mode level.

9. A protected circuit system according to any preceding claim wherein said one or more integrated circuits comprise a plurality of integrated circuits with a common function and a communications interface, wherein one said integrated circuit is a responding integrated circuit, wherein said communications interface is configured to receive instructions from an external host, and to transmit said instructions to each said integrated circuit, and to receive an response from said responding integrated circuit, and to transmit said response via said timing interface as an output of said protected circuit system.

10. The protected circuit system of claim 9 wherein each said integrated circuit comprises identical circuits to the extent required for the processing of said instructions.

11. The protected circuit system of any preceding claim wherein said communications interface comprises a respective plurality of operational amplifiers in a voltage follower configuration.

12. The protected circuit system of any preceding claim further comprising an enclosure, wherein said enclosure comprises a first conductive shell substantially enclosing said one or more integrated circuits and a further conductive component, whereby a complex impedance having a non-zero imaginary component subsists between said first conductive shell and said further conductive component, said protected circuit system further comprising an integrity monitor adapted to detect a deviation in said complex impedance, wherein said integrity monitor is further adapted to perform one or more of instigating a reset one or more of said plurality of integrated circuits, clearing a memory of said protected circuit system, or permanently disabling said one or more of said plurality of integrated circuits.

13. The protected circuit system of claim 12 wherein said protected circuit system comprises a plurality of said integrated circuits, and wherein said plurality of integrated circuits are spaced apart around the internal periphery of said first conductive shell.

14. The protected circuit system of claim 12 or 13 wherein said further conductive component is a second conductive shell nested within said first conductive shell, and electrically isolated therefrom by a dielectric material, vacuum or air gap.

15. The protected circuit system of claim 12, 13, or 14 wherein said protected circuit system comprises a plurality of further conductive shells, said further conductive shells being nested each within the next, the first conductive shell being nested in the further conductive shells, wherein alternating said conductive shells are electrically connected so that said complex impedance having a non-zero imaginary component subsists between said alternating said conductive shells.

16. A method of operating a protected circuit system comprising one or more integrated circuits and a timing interface, said method comprising the steps of receive signals travelling to or from said one or more integrated circuits at said timing interface, introducing a variable delay to said signals, transmitting onwards to their intended destination.

17. A computer program comprising instructions implementing the steps of claim 16.
